# EUROPEAN PATENT SPECIFICATION

(11) **EP 2 271 089 B1**
(45) Date of publication and mention of the grant of the patent: **28.09.2016**
(21) Application number: 10183119.6
(22) Date of filing: 20.02.2004
(51) Int. Cl.: G11B 27/10, G11B 27/34, H04N 5/44, H04N 5/445, H04N 5/45, H04N 5/765, H04N 5/775, H04N 9/806, H04N 9/82, H04N 21/422, H04N 21/431, H04N 21/434, H04N 21/47, H04N 21/482, H04N 21/485, H04N 21/488

(54) **Apparatus and method for simultaneously utilizing audio visual data**
Vorrichtung und Verfahren zur simultanen verwendung von audiovisuellen Daten
Appareil et procédé pour l'utilisation simultanée de données audiovisuelles

(30) Priority: 21.02.2003 US 449162 P
(43) Date of publication of application: 05.01.2011
(62) Divisional of application: 04713447.3
(73) Proprietor: Panasonic Intellectual Property Management Co., Ltd., Osaka 540-6207 (JP)
(72) Inventor: McCrossan, Joseph, Burbank, CA 91501 (US); Kozuka, Masayuki, Osaka 560-0082 (JP); Minami, Masataka, Hyogo 662-0066 (JP)
(74) Representative: MacLachlan & Donaldson

(56) References cited:
- EP-A1- 0 788 106
- EP-A1- 1 011 268
- EP-A2- 0 765 082
- WO-A1-03/007597
- US-A- 6 128 434
- US-A1- 2001 005 900
- US-A1- 2002 101 537
- US-B1- 6 476 871

## Description

### CROSS-REFERENCE TO RELATED APPLICATIONS

This application claims the benefit of a provisional application Serial No. 60/449,162 filed on February 21, 2003 for the utilization of interchangeable AV data residing on storage media.

### FIELD OF THE INVENTION

The present invention relates to reproducing video, audio, and subtitle data and more particularly to reproducing multiple interchangeable types of data simultaneously.

### DESCRIPTION OF RELATED ART

On a conceptual level, Audio Visual (AV) multimedia content designed for distribution and playback, typically consists of one or more data streams containing multiple interchangeable components or substreams conforming to an AV content distribution and/or playback standard. Such standards specify a player model whereby only one substream from a particular type or class of data streams can be reproduced at the same time. There can be, for example, multiple audio substreams available for a particular AV application, but only one audio substream is selected for reproduction.

The AV applications typically conform to a de-facto standard so that they can be decoded and presented by players in a consistent fashion. A current format includes the Digital Versatile Disc (DVD-Video) format, and future examples include the High Density-Digital Versatile Disc (HD-DVD) format and the Blu-ray Disc (BD) pre-packaged format. Such de-facto standards specify a conceptual model such that each player will use this model to determine correct decoding behavior. AV applications will be written to the platform defined by the conceptual player model and in the data format specification defined by the standard to ensure consistent behavior during playback across different players.

This scheme has drawbacks, however, in that it is not possible for content creators who are authoring the AV applications to take advantage of higher performance or extended functionality implemented in players after the de-facto standard has been established. For example, positions for graphical presentation data are fixed being predetermined at the Authoring time based on the player model which defines simultaneous playeback of only one media substream of each stream time. The de-facto standard is reinforced in that the menus contained in the AV application are designed such that only substream of each stream type can be selected for reproduction.

AV applications residing on optical storage media, for example, often contain several different types of data streams with interchangeable substreams. For example, an audio type of data stream could include a main audio substream, commentary substreams from directors, actors, or producers, and a dialog translation substream. These data streams are either audible or visual in nature. In such AV applications, the user can select only one substream from a particular class or type of data stream for rendering during the AV application runtime.

There is a need to provide an extended player model that overcomes the limitations and problems of media produced according to de-facto standards that restrict reproduction to only one substream from a plurality of substreams.

### BRIEF SUMMARY OF THE INVENTION

The present invention, as defined in the claims, overcomes the disadvantages associated with existing, one-substream decoding based player models, by describing a method and apparatus defining User Interface (UI) models and Player Models (PM) such that interchangeable substreams can be simultaneously utilized during AV application reproduction.

By the present innovation, interchangeable substreams contained on optical storage media, for example, can be simultaneously utilized during AV application reproduction, thus providing new usage models for this data in addition to those already defined by the AV application itself. Moreover, a means to associate independent data streams together is described, thereby also providing new usage models. Several applications can be derived from a system that can simultaneously decode and render multiple media data streams:

1) Language Education. Two or more unique subtitle streams are available for one AV application. One embodiment of the system of the present invention provides the user with an option of selecting a plurality of subtitle substreams to render and where, on screen, they should be displayed. As each subtitle stream is in a different language, this system can provide the user with a useful tool for language education. For example, the user can select one of an Asian language subtitle substream and an English subtitle substream for simultaneous display during the reproduction. A user of such a system would be able to see both English and the Asian language subtitles simultaneously as an aid for language learning.

2) Personalized audio track. If two or more unique audio streams are available for one AV application, one embodiment of the present invention can provide each user with a personal audio playback system and an option of which audio stream to decode on their personal audio playback system. This personal audio playback system could be, for example, a radio receiver with headphones. Such a system would be useful for providing audio dialog translation or commentary streams when the same media presentation is provided at the same time to multiple users.

3) Personalized visual dialog translation. When two or more unique subtitle substreams are available for one AV application, one embodiment of the present invention provides each user with a personalized display and an option to select which subtitle substream to decode on their personal display. This would be useful for providing personalize dialog translation when the same media presentation is provided at the same time to multiple users who wish to view a particular subtitle substream that other users may not wish to view. This would also be useful in a public gathering where groups of users who wish to view a particular subtitle stream associated with the media presentation view from a common display for that group of users where more than one language is commonly used.

### BRIEF DESCRIPTION OF THE DRAWINGS

The exact nature of this invention, as well as the objects and advantages thereof, will become readily apparent upon consideration of the following specification in conjunction with the accompanying drawings in which like reference numerals designate like parts throughout the figures thereof and wherein:
Figure 1 is a block diagram showing multiple subtitle substreams according to a first embodiment.
Figure 2A is a flow diagram showing a user selection method for the display location of a plurality of subtitle substreams on a single display unit where the priority of display is assumed to be the order the substreams are selected.
Figure 2B is a flow diagram showing a user selection method for the display priority of a plurality of subtitle substreams on a single display unit.
Figure 2C is a flow diagram showing a user selection method for the display location of a plurality of subtitle substreams on a single display unit.
Figure 2D is a flow diagram showing a presentation of the multiple subtitle selection to a user.
Figure 3 is a flow diagram showing a user selection method for rendering a plurality of subtitle substreams on multiple display units.
Figure 4 is a block diagram showing multiple audio substreams according to a second embodiment.
Figure 5A depicts an example of two subtitle streams displayed in a top-and-bottom orientation.
Figure 5B depicts an example of two subtitle streams displayed in a side-by-side orientation.
Figure 6 is a flow diagram showing the user model associated with the second embodiment for selecting multiple audio substreams.
Figure 7 is a block diagram showing multiple subtitle substreams according to a third embodiment.
Figure 8 is a block diagram showing multiple subtitle substreams according to a fourth embodiment.
Figure 9 is a flow diagram showing the user model associated with the first, third, and fourth embodiment including the auto-repeat feature.
Figure 10 is a block diagram showing multiple video substreams according to a fifth embodiment.
Figure 11 is a flow diagram showing a user selection method for the display location of a plurality of video substreams on a single display unit.
Figure 12 is a flow diagram showing the toggling selection between alternative auto-repeat setups.
Figure 13 is a flow diagram showing an initial setup following introduction of a media element.

### DETAILED DESCRIPTION OF THE PREFERRED EMBODIMENTS

Reference will now be made in detail to the preferred embodiments of the invention, examples of which are illustrated in the accompanying drawings. While the invention will be described in conjunction with the preferred embodiments, it will be understood that they are not intended to limit the invention to these embodiments. On the contrary, the intention is intended to cover alternatives, modifications and equivalents, which may be included within the scope of the invention as defined by the appended claims.

Furthermore, in the following detailed description of the present invention, numerous specific details are set forth in order to provide a thorough understanding of the present invention. However, it will be obvious to one of ordinary skill in the art that the present invention may be practiced without these specific details. In other instances, well known methods, procedures, components, and circuits have not been described in detail as not to unnecessarily obscure aspects of the present invention.

The present invention, as defined in the claims, includes user selection models for multiple substream decoding and/or data stream association coupled together with a player model, extending the current art player design to incorporate decoding behavior based on user selection information including multiple interchangeable substream decoding. The following description of the presently preferred embodiments teach user selection methods for selection of multiple substreams to be utilized during AV application runtime and can be used in conjunction with the stream selection methods provided by the AV application itself.

Further, the presently preferred embodiments teach user selection methods for providing new application usage models involving two or more interchangeable substreams and a player model incorporating user preference information to provide a framework to decode and utilize two or more interchangeable substreams where the AV application itself does not provide such an option. The user selection methods may be provided via on-screen or on-device selection or more simply via direct key presses on a remote control unit.

When interchangeable substreams are to be simultaneously visually rendered on the same display, a user selection method for adjusting the display location of the visual substreams may be provided. Typically, location information is provided by the AV application itself where substreams will be designed to appear at particular display locations. This invention provides user selection models to define information used by the player to alter the behavior of the standard decoding model, as defined by the standard to which the AV application is designed, in order to incorporate user defined preferences for location of visual substreams; typically location information for visual substreams is pre-defined at the time of Authoring the AV application.

The user preference information may be used in conjunction with location information associated with the visual substream to provide offset locations for visual data or may be used instead of location information associated with the substream. Moreover, multiple visual substreams to be simultaneously displayed are alpha overlaid together prior to display on a single display unit - a user selection method and player capability may be provided to determine the order of overlay for visual substreams whereby the user will determine the priority of the substreams and the player will overlay higher priority substreams last, at the top, and so obscure the appearance of lower priority substreams should they share the same area on the display.

When interchangeable substreams are to be simultaneously rendered on different devices, a user selection method for substreams-to-device is provided and the player model is extended to incorporate such simultaneous output. When the interchangeable substream is to be rendered remotely from the main playback environment a means to transmit the substream and a remote playback device is provided. For the purposes of this description, a composite media stream containing a plurality of different types of streams such as a video stream, an audio stream, and a subtitle stream may also include a plurality of substreams of these various types. The terminology of a substream is used to exemplify a number of identical streams of the same type and not necessarily to distinguish from a particular type of composite media stream where only one stream of that type is included.

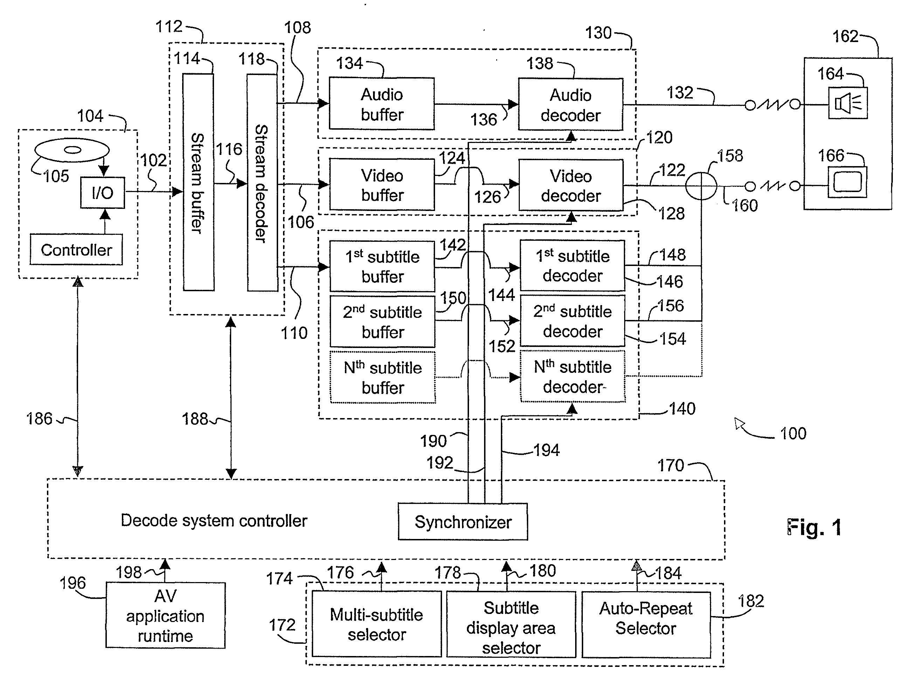

In reference to Figure 1, an Audio Visual (AV) reproduction system 100 for reproducing AV data is shown in a first embodiment including a plurality of subtitle substreams in a playback environment with one display unit. The reproduction system 100 may also be considered a player model. The AV player model 100 receives a composite media stream 102 provided by a composite media source 104. For this and other embodiments, the composite media source 104 can be a player device for a fixed media element 105 such as Digital Versatile Disc (DVD), High Density Digital Versatitle Disc (HD-DVD) or Blu-ray Disc (BD) optical media.

The player device can read information from the fixed media element 105 and produce the composite media stream 102. Alternatively, the composite media source 104 can be a media receiver for receiving a broadcast signal for this or other embodiments. The broadcast signal can be an Over-The-Air (OTA) signal such as that which is broadcast by a television station or, in another alternative transmission source, the broadcast signal can be a cable-based signal from a cable service provider, for example. The media receiver can receive a Radio Frequency (RF) signal and extract the composite media stream 102 directly or store the signal to another media device before extracting the composite media stream 102.

The composite media stream 102 includes a video data-stream 106, an audio data-stream 108, and a subtitle data-stream 110 including a plurality of subtitle substreams. The terms stream and data-stream are equivalent for this description. A composite media stream separator unit 112 receives the composite media stream 102 and extracts the video stream 106, the audio stream 108, and the subtitle data-stream 110 including a plurality of subtitle substreams as directed by the decode system controller 170. The composite media stream separator unit 112 includes a composite media stream buffer 114 for receiving and storing the composite media stream 102 and producing a buffered composite media stream 116. The buffered composite media stream 116 is applied to the composite media stream decoder 118 that separates the video substream 106, the audio substream 108, and the subtitle substream 110 from the buffered composite media stream 116.

A video decoder unit 120 receives the video stream 106 and produces a decoded video output 122. The video decoder unit 120 includes a video buffer 124 that receives the video stream 106 and produces a buffered video stream 126. A video decoder receives the buffered video stream 126 and produces the decoded video output 122.

An audio decoder unit 130 receives the audio stream 108 and produces a decoded audio output 132. The audio decoder unit 130 includes an audio buffer 134 that receives the audio stream 108 and produces a buffered audio stream 136. An audio decoder 138 receives the buffered audio stream 136 and produces the decoded audio output 132.

A subtitle decoder unit 140 of the present embodiment simultaneously decodes a plurality of subtitle substreams to produce a corresponding plurality of decoded subtitle outputs. The subtitle decoder unit 140 receives the subtitle data stream 110 including a plurality of subtitle substreams and buffers each subtitle substream to produce a corresponding plurality of buffered subtitle substreams.

For example, a first subtitle substream is buffered by a first subtitle buffer 142 to produce a buffered first subtitle substream 144. A first subtitle decoder 146 receives the buffered first subtitle substream 144 and produces a first decoded subtitle output 148. Similarly, a second subtitle substream is buffered by a second subtitle buffer 150 to produce a buffered second subtitle substream 152. A second subtitle decoder 154 receives the buffered second subtitle substream 152 and produces a second decoded subtitle output 156. This buffering and decoding is done for each of the user selected subtitle substreams. The user selected subtitle substreams defines a display configuration that determines which subtitle substreams are selected and how the subtitle substreams are displayed.

Buffering and decoding as herein described is drawn to a conceptual model only, whereas an actual implementation may utilize software only decoding processes or one hardware decoder capable of decoding two or more streams within the constraints of simultaneous AV application playback. The phrase simultaneous decoding includes the ability of decoding whether serially or in parallel so that the decoded data may be used within the same associated portion of the media presentation, and does not only comprehend parallel decoding with separate decoding units.

A video rendering unit 158 receives the decoded video output 122 and the plurality of decoded subtitle outputs (148, 156) to produce a rendered video output 160 composed of an overlay of the selected decoded information, and presented according to user defined priority information provided to the subtitle substream selector unit 174 and the decode system controller 170. The rendered video output 160 is an alpha overlay of the plurality of decoded subtitle outputs on the decoded video output 122. The decoded audio output 132 and the rendered video output 160 are applied to a reproduction unit 162 having an audio reproduction unit 164 and a video reproduction unit 166. The audio reproduction unit 164 receives the decoded audio output 132 and reproduces the decoded audio output in audible form. The video reproduction unit 166 receives the rendered video output 160 and reproduces the rendered video output 160 in a visual form.

A decode system controller 170 provides configuration and synchronization processes for the AV reproduction system 100. In addition to the information regarding desired substream decoding provided by the AV application, the decode system controller 170 receives user preference information from a user command unit 172. The user command unit 172 includes a subtitle substream selector 174 that provides a selected subtitle substream user input 176 regarding the selection of subtitle substreams. This information is used by the system controller 170 in addition to the subtitle substream selection provided by the AV application so that both the AV application information and additional user input supported by the player model are used together to determine which substreams are rendered during reproduction.

Additional user input may be used instead of the subtitle substream selection provided by the AV application thereby giving the player complete control over which substreams are decoded. The user command unit 172 may include a subtitle substream display area selector 178 to provide a display location user input 180 regarding the selected display location for the selected subtitle substreams. This information is used by the system controller 170 to determine the position of subtitle substreams after decoding (148, 158) and is passed by the system controller 170 to the subtitle decoders (146, 154). The system controller 170 may signal to the subtitle decoders (146, 154) that the user input is used in addition to the information contained in the actual subtitle substreams selected by the AV application thus providing offsets to visual data.

Alternatively, the user input display locations may be used instead of and without regard to the display location information described by the AV application this providing absolute positions for the visual data. The user command unit 172 may include an auto-repeat selector 182 that provides an auto-repeat user input 184 for commanding an automatic repeating the reproduction of a predetermined portion of the rendered video output 160 with either the same display configuration as previously reproduced, or with a different display configuration showing either the same set of selected subtitles or a different set of selected subtitles. The user selected subtitle substreams defines a display configuration that determines which subtitle substreams are selected and how the subtitle substreams are displayed. The auto-repeat selector applies a user input to automatically repeat the reproduction of a predetermined portion of the composite media stream with the selected display configuration.

In the case of a different display configuration, the user may provide information on the alternative display configuration before playback begins or during runtime by accessing player menus or via remote control key presses. When an auto-repeat occurs, the system controller 170 may cause the playback position to jump back a certain user-defined amount, to jump to a user-defined point in the media presentation, to some point defined by the media source 104, or included within the media element 105. The AV application runtime 196 represents the current state of an AV application during playback. It includes the state of the virtual machine used to execute commands and store results as well as the player state which includes information on the current substreams that are in the process of being decoded. The AV application runtime 196 provides control information 198 to the decode system controller 170 regarding stream playback. This includes, but is not limited to: the streams are to be decoded and played back, including the position of playback, playback start, playback pause or stop, and trick play (fast-forward or rewind), for example.

The decode system controller 170 both provides control signals to and receives status information from the various resources of the AV reproduction system 100. The decode system controller 170 communicates with the composite media source 104 via a media source signal 186. The media source signal 186 includes signals from the decode system controller 170 to the composite media source 104 in order to operate the composite media source 104 as well as status signals from the composite media source 104 to the decode system controller 170.

For example, a status signal may indicate that a fixed media element 105 has been inserted into the composite media source 104 and is ready for reading. Alternatively, a status signal may indicate that a broadcast signal is received or in process of reception. The decode system controller 170 can assert a signal to a controller in the composite media source to instruct the composite media source to begin reading data from the inserted fixed media element 105 or else to begin outputting the information from reading such an element as the composite media stream 102.

The decode system controller 170 communicates with the composite media stream separator unit 112 via a media separator signal 188. The media separator signal 188 includes signals from the decode system controller 170 to the composite media stream separator unit 112 in order to operate the stream buffer 114 and the stream decoder 118. The media separator signal 188 includes signals from the media stream separator unit 112 to the decode system controller 170 to indicate the status of the composite media stream buffer 114, whether the composite media stream buffer 114 is empty, half-full, or full, for example. Similarly, the composite media stream decoder 118 asserts status signals and information to the decode system controller 170 including, for example, stream management information such as frame boundary information, the number and type of substreams, and stream validation information such as check-sums.

The decode system controller 170 also provides a synchronization function by which the related media streams are aligned for decoding and outputting so as to comport to the standard frame boundary. According to one standard, the frame consists of one-half second intervals during reproduction. In other standards, alternative reproduction periods may be used along with other timing-related controls. For example, a pause function may be used to halt the reproduction at the current frame. In the case where the composite media stream 102 comes from a fixed media element 105, the decode system controller will also halt reading of the fixed media element 105 so as to minimize the required size and cost of the composite media stream buffer 114.

The precise implementation details are known to a person of skill in the art and are not repeated here in order to not obscure the novelty of the present invention. Various further preferred features and embodiments of the present invention will now be described with reference to the following non-limiting examples.

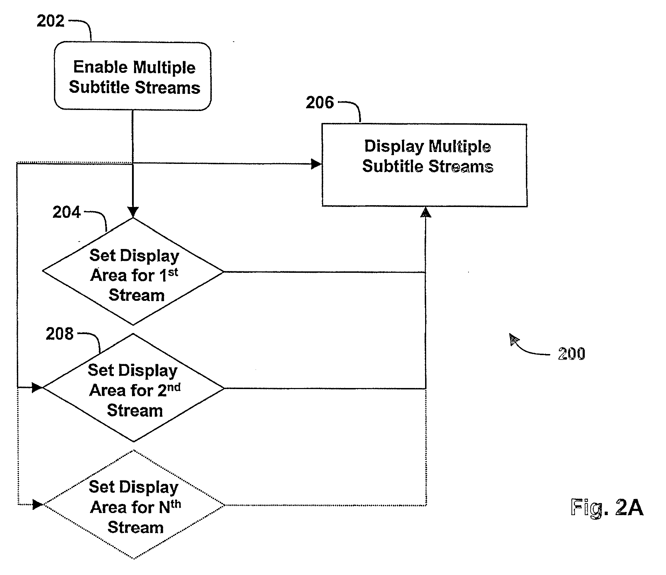

Figure 2A is a flow diagram showing, at a high level, the user selection model for selecting multiple subtitle substreams where the priority of display is assumed to be the order of the substreams selected. A user enables the selection of multiple subtitle substreams in step 202. This may be accomplished by the pressing of keys on a specially programmed remote control device which communicates with the AV reproduction system 100 by an infrared optical channel or by entering the information directly on a control panel user interface (not shown) of the AV reproduction system itself. For example, a user can press one or more buttons on the remote control unit or control panel to enable multiple subtitles an then select which subtitle streams should be shown.

In another alternative, the user can enter this preference information via an on-screen menu. After the selection of multiple substreams is enabled in step 202, the user selects the display area for the first stream. Following this selection, the selected subtitle is set for display in step 206. Similarly, to select a second subtitle stream, a user enables the selection of multiple substreams in step 202 and then sets the display area for the second stream in step 208. Following this selection, the selected subtitle is set for display in step 206 with the highest priority for display assigned to the first substream and the next lower display priority being assigned to the second subtitle substream. This process is repeated for subsequently selected substreams which are displayed at a decreasingly lower priority.

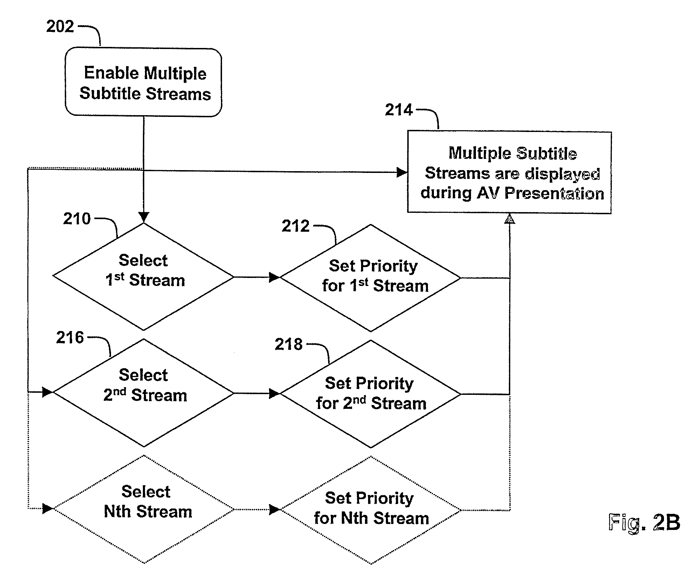

In an alternative selection mode, once the multiple subtitle substreams are selected, a display priority for each selected subtitle substream may be manually set by the user as shown in Figure 2B. After the selection of multiple substreams is enabled in step 202, the first stream is selected in step 210 and the display priority may be set in step 212 by entering a variable number using the numeric keys on the remote control, or by selecting from a palate of fixed choices for display such as high, normal, and low for each of the selected subtitles. Once the priority is set for the selected substream, the selected multiple subtitle streams are set for display in step 214. Similarly, the selection of multiple substreams is enabled in step 202 and the second stream is selected in step 216 and the display priority may be set in step 218. This process is repeated for each selected substream.

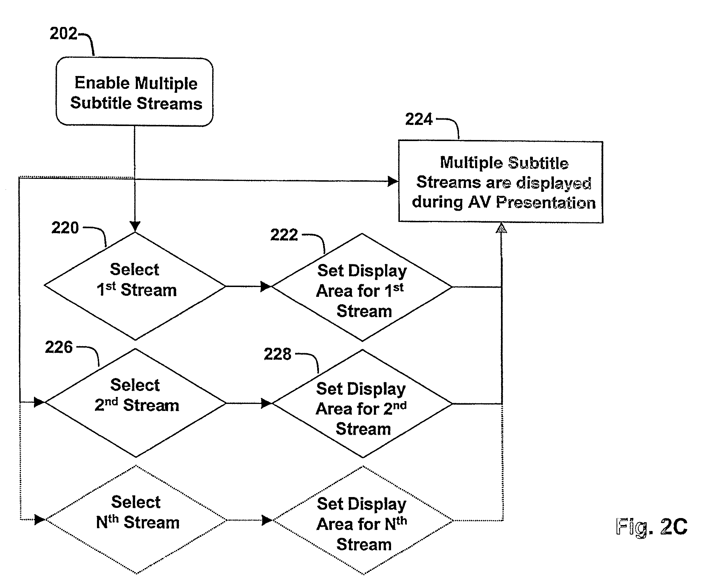

An error condition may be generated if a subsequent subtitle substream is set to the same priority as another previously defined substream. Feedback to the user performing the setup procedure can be shown visually on the video reproduction unit 166 or on a remote device. Once the multiple subtitle streams are selected, a display area for each selected subtitle substream may be set by the user as shown in Figure 2C. The display location for the first subtitle substream may be set in step 222. This may be accomplished by selecting from a palate of fixed choices for display area such as bottom-center, top-center, top-right, top-left, bottom-right, and bottom-left for each of the selected subtitles. An error condition may be generated if a subsequent subtitle substream is set for an overlapping display area with a previously selected area. Feedback to the user performing this setup procedure can be shown visually on the video reproduction unit 166.

Another method for selecting multiple subtitle substreams and then selecting a display area for the selected substreams is shown in Figure 2C. After the selection of multiple substreams is enabled in step 202, the first stream is selected in step 220 and the display area may be set in step 222 as described in reference to Figure 2A. Once the first stream is selected and the display area for the first stream is selected, the first selected subtitle stream is set for display in step 224. After the selection of multiple substreams is enabled in step 202, the second stream is selected in step 226 and the display area may be set in step 228. Once the second stream is selected and the display area for the second stream is selected, the second selected subtitle stream is set for display in step 224.

Alternatively, the position of the rendering location may be flexible, and determined based on user inputs that include locating an anchor point, say the bottom-left corner of the rendering box, at a particular point on the screen based on user inputs that can determine an X-Y (horizontal-vertical) location on the display screen. These choices can be presented to the user as a part of the initialization or setup process prior to accessing a selected composite media source 104.

The choices for display position/area can be presented to the user as a part of the initialization or setup process prior to accessing a selected composite media source 104 or prior to playback of the AV presentation. Alternatively, they can be presented to the user during the playback of the AV application, where the playback of the AV presentation is not interrupted and the user can select, dynamically, which area the subtitle substream is allocated to.

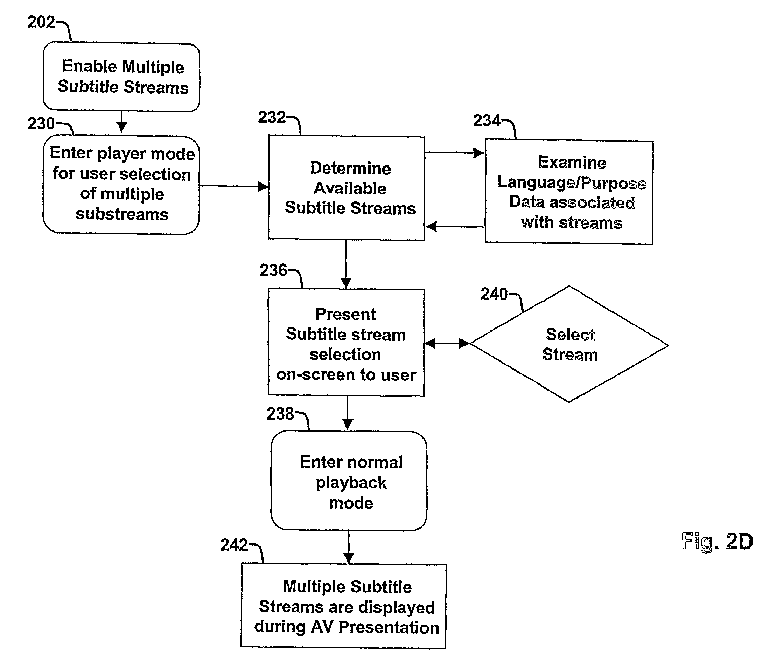

A possible means to present subtitle choices to the user, both on screen and via remote display is shown in Figure 2D. Multiple subtitle stream reproduction capability is enabled in step 202. Once multiple subtitle streams are enabled, a player mode for user selection of multiple substreams is entered in step 230. In step 232 the available subtitle streams are determined. In step 234 the player can use language and/or purpose descriptions associated with the subtitle substreams to present options to the user on-screen for selection of the multiple subtitle substreams to be used during AV presentation.

Once this information is determined, the subtitle stream selections are presented to the user in step 236. If no language and/or purpose information is available, the player can automatically assign another code value to each stream. If no subtitle substreams are available for selection, the reproduction system can enter the normal playback mode in step 238. If subtitle substreams are available for selection, the user proceeds to selection of the available subtitle substreams in step 240.

Alternatively, this information could be obtained using a predetermined technique at Authoring. In such a case, when Authoring the AV application, a specific process will be followed for setting the subtitle substream by the AV application. This can be accomplished by using specific values in reserved fields or by providing a specific structure sequence that is not likely to occur under normal authoring conditions, for example. The player can then use the AV application menus to provide the user with options to set multiple streams instead of player generated menus; each time the user selects an item from the menu, the player checks to see if a specific register has been set and if so add the corresponding subtitle substream to the list of substreams to be displayed. The player could display feedback to the user using a player specific display or an on-screen menu.

EXAMPLE 1 : Two or more unique subtitle substreams are available for one AV application. The system provides the user with an option of which subtitle substreams to render and the on-screen location where each should be displayed. Figure 1 illustrates the player model while Figures 2-3 show the user models for this embodiment.

EXAMPLE 2 : For example, each subtitle stream can be in a different language and this system can provide the user with a useful tool for language education - the user can view two subtitle substreams simultaneously and use one subtitle substream as a reference to the other. This example application would be particularly useful for the Asian market where, for example, English and Japanese language subtitle streams could be simultaneously displayed. Of course, any two languages available from the composite media stream may be selected. Further, more than two subtitle substreams may be shown depending on the user selection.

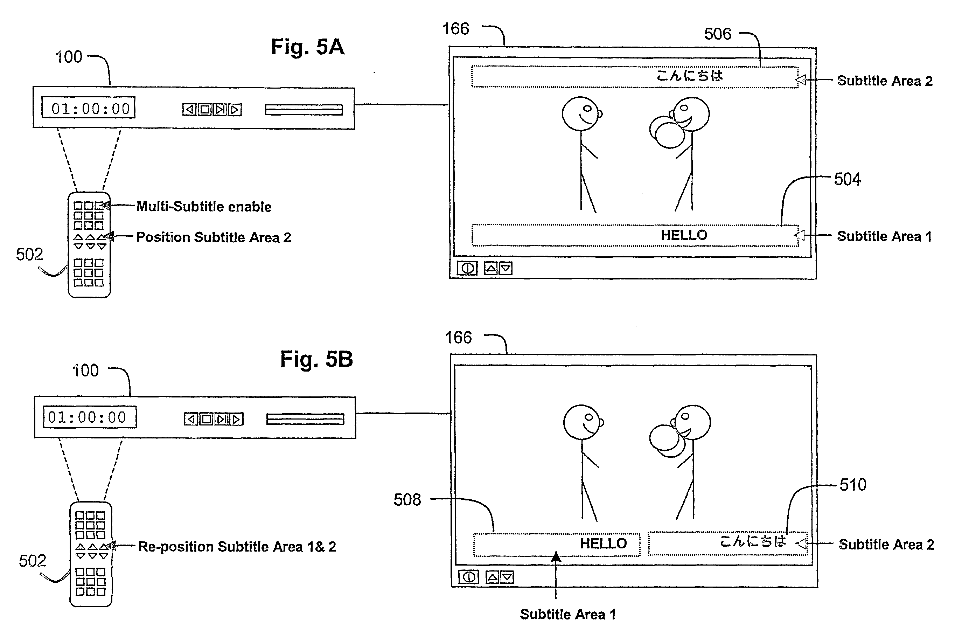

Figures 5A-5B show examples of this application where two subtitle substreams are shown in two different configurations. Figure 5A depicts an example of two subtitle streams displayed in a top-and-bottom orientation. The AV reproduction system 100 is programmed via a specially programmed remote control unit 502. A first key on the remote control unit 502 is used to enable the multiple-subtitle substreams as described in reference to Figure 5A. In this case, the first selected subtitle substream 504 is positioned near the bottom portion of the display while the second selected subtitle substream 506 is positioned near the top portion of the display. The position of the first subtitle substream can be a default value near the bottom of the display of the video reproduction unit 166.

Similarly, Figure 5B depicts an example of two subtitle streams displayed in a side-by-side orientation which are selected as described above. In this case, the first selected subtitle substream 508 is positioned near the bottom-left portion of the display while the second selected subtitle substream 510 is positioned near the bottom-right portion of the display. A user can "toggle" between these two display configurations by pressing a particular key on the specially programmed remote control device 502. The user selected subtitle substreams defines a display configuration that determines which subtitle substreams are selected and how the subtitle substreams are displayed. Figure 5A defines a first display configuration. Figure 5B defines a second display configuration. The auto-repeat selector applies a user input to automatically repeat the reproduction of a predetermined portion of the composite media stream with the selected display configuration and can toggle between the predetermined first and second display configurations.

According to one industry standard, a DVD-Video application can contain up to 32 subtitle substreams. Currently, DVD-Video players can playback only one subtitle stream or substream during the DVD-Video application runtime. This innovation, when applied to DVD-Video, defines a method for simultaneously reproducing multiple subtitle substreams thus providing a useful tool for language education.

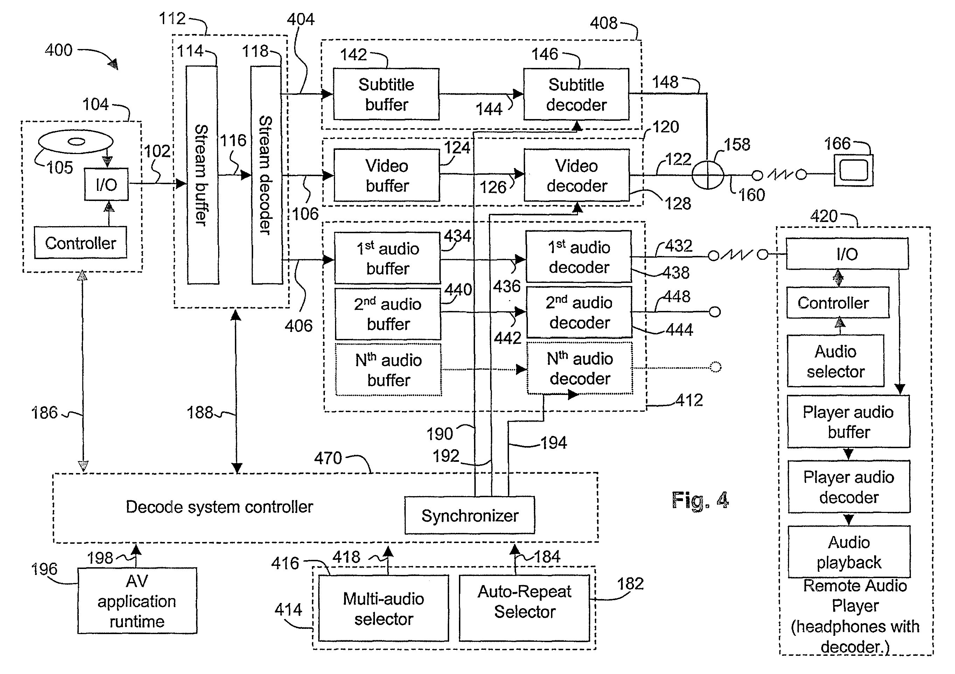

In reference to Figure 4, an audio visual (AV) reproduction system 400 for reproducing AV data is shown in a second embodiment including a plurality of audio substreams in a player model with a video reproduction unit and a plurality of audio reproduction units. The AV reproduction system 400 receives a composite media stream 102 provided by a composite media source 104. The composite media source 104 can be a player device for a fixed media element 405 such as a Digital Versatile Disc (DVD) or a Blu-ray Disc (BD). The player device can read information from the fixed media element 405 and produce the composite media stream 402.

The composite media stream 402 includes a video stream 106, an audio stream 108 including a plurality of audio substreams, and a subtitle stream 110. A composite media stream separator unit 112 receives the composite media stream 102 and produces the video stream 106, the plurality of audio substreams 406, and the subtitle stream 404 as directed by the decode system controller 170. The composite media stream separator unit 112 includes a composite media stream buffer 114 for receiving and storing the composite media stream 102 and producing a buffered composite media stream 116. The buffered composite media stream 116 is applied to the composite media stream decoder 118 that separates the video stream 106, the plurality of audio substreams 406, and the subtitle stream 404 from the buffered composite media stream 116.

A video decoder unit 120 receives the video stream 106 and produces a decoded video output 122. The video decoder unit 120 includes a video buffer 124 that receives the video stream 106 and produces a buffered video stream 126. A video decoder receives the buffered video stream 126 and produces the decoded video output 122.

An audio decoder unit 412 of the present embodiment simultaneously decodes a plurality of audio substreams to produce a corresponding plurality of decoded audio outputs. The audio decoder unit 412 receives the audio stream 406 including a plurality of audio substreams and buffers each audio substream to produce a corresponding plurality of buffered audio substreams.

For example, a first audio substream is buffered by a first audio buffer 434 to produce a buffered first audio substream 436. A first audio decoder 438 receives the buffered first audio substream 436 and produces a first decoded audio output 432. Similarly, a second audio substream is buffered by a second audio buffer 440 to produce a buffered second audio substream 442. A second audio decoder 444 receives the buffered second audio substream 442 and produces a second decoded audio output 448.

This buffering and decoding is done for each of the user selected audio substreams. This buffering and decoding is meant to describe a conceptual model only, whereas a real-world implementation may utilize software only decoding processes or one hardware decoder capable of decoding two or more streams within the constraints provided by real-time AV application playback.

A subtitle decoder unit 408 receives the audio stream 404 and produces a decoded audio output 148. The subtitle decoder unit 408 includes a subtitle buffer 142 that receives the subtitle stream 404 and produces a buffered subtitle stream 144. A subtitle decoder 146 receives the buffered subtitle stream 144 and produces the decoded subtitle output 148.

A video rendering unit 158 receives the decoded video output 122 and the decoded subtitle output 148 to produce a rendered video output 410. The rendered video output 410 is an overlay of the decoded subtitle output 148 on the decoded video output 122 which can be applied to a video reproduction unit 166. The video reproduction unit 166 receives the rendered video output 410 for reproduction in a visual form. Each of the plurality of decoded audio outputs (432, 448) is applied to one of a plurality of audio reproduction units 420. For example, the audio reproduction unit 420 receives the decoded audio output 432 and reproduces the decoded audio output 432 in audible form.

The audio reproduction unit 420 can be a Remote Audio Player including headphones and a playback decoder. The plurality of decoded audio outputs (432, 448) can include a stereo stream where two monaural streams are decoded and reproduced in a complementary fashion. In this embodiment, a plurality of users can view a reproduced video image on the video reproduction unit 166 while listening to one or more selected audio streams. This would permit, for example, a plurality of users to hear the audio substream in a preferred language while viewing the common video reproduction unit 166.

A decode system controller 170 provides configuration and synchronization for the AV reproduction system 400 of the second embodiment. In addition to the information regarding desired substream decoding provided by the AV application, the decode system controller 170 receives user preference information from a user command unit 414. The user command unit 414 includes a multi-audio selector 416 that provides a selected audio substream user input 418 regarding the selection of audio substreams. The terminology of an audio substream is to exemplify a plurality of streams of the audio type. Each audio substream of the second embodiment is identical in format as the single audio stream of the first embodiment. Similarly, each subtitle substream of the first embodiment is identical in format to the subtitle stream of the second embodiment.

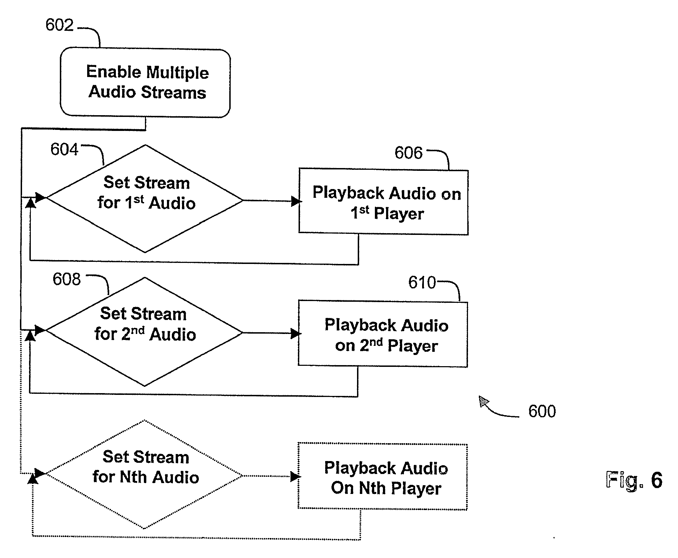

Figure 6 is a flow diagram showing a user selection method for selecting multiple audio substreams. A user enables the selection of multiple audio streams in step 602 which is similar to that described in respect to step 202. For each of the selected audio substreams is assigned to a particular audio reproduction unit. For example, the audio substream selected as the first audio substream is set for display in step 604. Once the first audio substream is selected, it is assigned to the first audio reproduction unit in step 606. Similarly, the audio substream selected as the second subtitle substream is set for display in step 608. Once the second subtitle substream is selected, it is assigned to the second display unit in step 610. This process is repeated for each of the selected audio substreams.

EXAMPLE 3 : Two or more unique audio substreams are available for one AV application. The system provides each user with a personal audio playback system (e.g. headphones) and an option of which audio substream to decode on their personal audio playback system. Figure 4 shows the player model where a remote playback device is used as opposed to headphones. Figure 6 shows a user model for this example. This example application would be useful for providing audio dialog translation or commentary streams when the same media presentation is provided at the same time to multiple users.

EXAMPLE 4 : According to an industry standard, a DVD-Video application can contain up to eight audio substreams. Currently DVD-Video players can playback only one audio substream during the DVD-Video application runtime. The present invention, as applied to a standard DVD-Video, defines an apparatus and a method for simultaneously reproducing multiple audio streams thus providing a useful tool for the delivery of personalized audio streams during the presentation of a DVD-Video application.

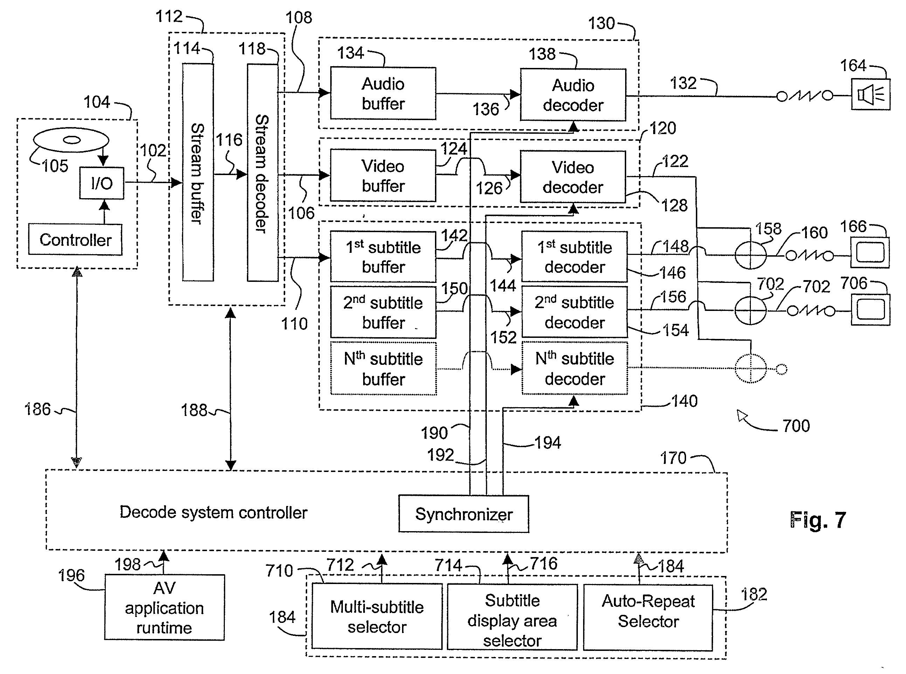

In reference to Figure 7, an audio visual (AV) reproduction system 700 for reproducing AV data is shown in a third embodiment including a plurality of subtitle substreams in a player model including a plurality of video reproduction units. The AV reproduction system 700 receives a composite media stream 102 provided by a composite media source 104.

The composite media stream 102 includes a video stream 106, an audio stream 108, and a subtitle stream 110 including a plurality of subtitle substreams. A composite media stream separator unit 112 receives the composite media stream 102 and produces the video stream 106, the audio stream 108, and the plurality of subtitle substreams. The composite media stream separator unit 112 includes a composite media stream buffer 114 for receiving and storing the composite media stream 102 and producing a buffered composite media stream 116. The buffered composite media stream 116 is applied to the composite media stream decoder 118 that separates the video stream 106, the audio stream 108, and the subtitle stream 110 from the buffered composite media stream 116.

A video decoder unit 120 receives the video stream 106 and produces a decoded video output 122. An audio decoder unit 130 receives the audio stream 108 and produces a decoded audio output 132. A subtitle decoder unit 140 of the present embodiment simultaneously decodes a plurality of subtitle substreams to produce a corresponding plurality of decoded subtitle outputs (148, 156). This buffering and decoding is done for each of the user selected "n" subtitle substreams.

A plurality of video rendering units (158, 702) each receive the decoded video output 122 and the plurality of decoded subtitle outputs (148, 156) to produce a plurality of rendered video outputs (160, 704). Each rendered video output (160, 704) is an overlay of the corresponding decoded subtitle output (148, 156) on the decoded video output 122. The decoded audio output 132 and the rendered video output 160 are applied to a reproduction unit 162 having an audio reproduction unit 164 and a video reproduction unit 166. The audio reproduction unit 164 receives the decoded audio output 132 and reproduces the decoded audio output in audible form. The video reproduction unit 166 receives the rendered video output 160 and reproduces the rendered video output 160 in a visual form.

A decode system controller 170 provides configuration and synchronization for the AV reproduction system 700. In addition to the information regarding desired substream decoding provided by the AV application, the decode system controller 170 receives user preference information from a user command unit 172. The user command unit 172 includes a subtitle substream selector 174 that provides a selected subtitle substream user input 176 regarding the selection of subtitle substreams. The user command unit 172 can include a subtitle substream display area selector 178 that provides a display location user input 180 regarding the selected display location for the selected subtitle substreams.

The user command unit 172 can also include an auto-repeat selector 182 that provides an auto-repeat user input 184 for commanding an automatic repeating the reproduction of a predetermined portion of the rendered video output 160 with either the same display configuration as previously reproduced, or with a different display configuration showing either the same set of selected subtitles or a different set of selected subtitles.

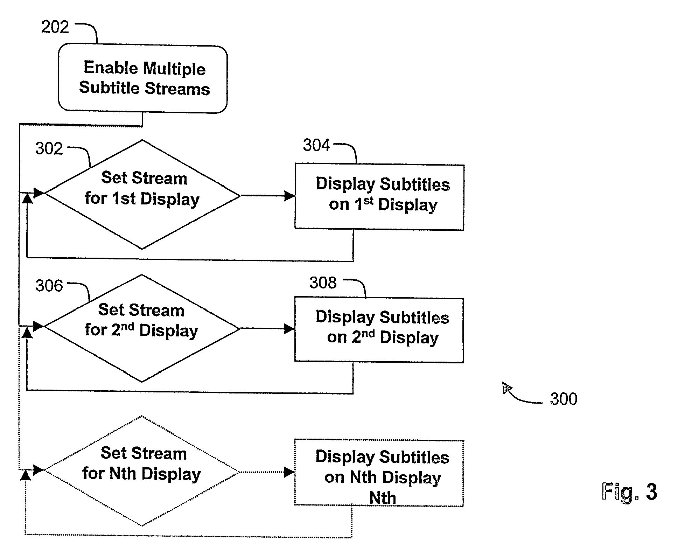

Figure 3 is a flow diagram showing a user selection method for rendering a plurality of subtitle substreams on multiple video reproduction units. A user enables the selection of multiple subtitle streams in step 202 as described above. For each of the selected subtitle streams is assigned to a particular video reproduction unit. For example, the subtitle substream selected as the first subtitle substream is set for display in step 302. Once the first subtitle substream is selected, it is assigned to the first video reproduction unit in step 304. Similarly, the subtitle substream selected as the second subtitle substream is set for display in step 306. Once the second subtitle substream is selected, it is assigned to the second display unit in step 308. This process is repeated for each of the selected subtitle substreams.

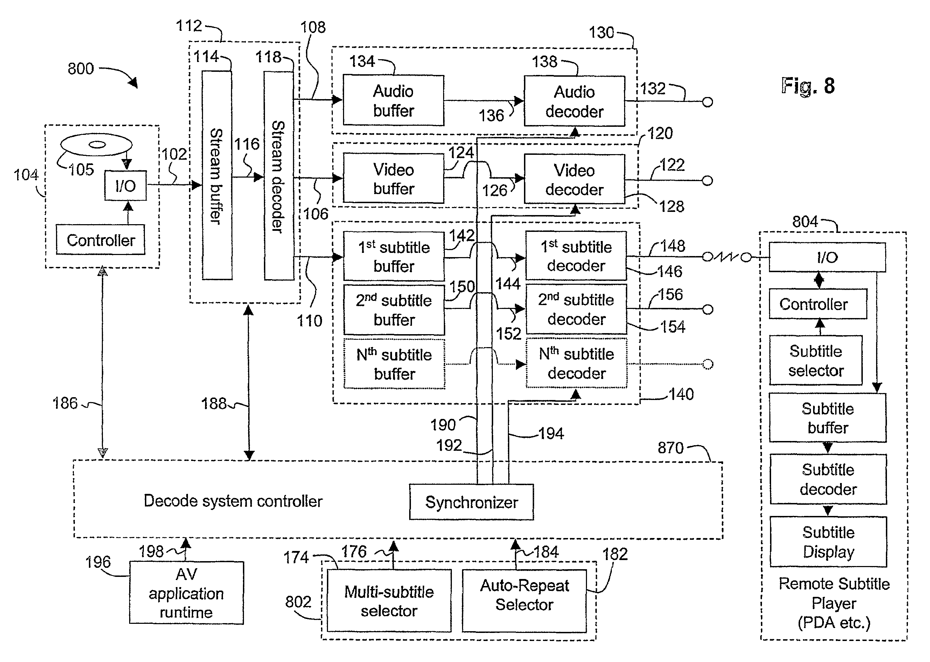

In reference to Figure 8, an audio visual (AV) reproduction system 800 for reproducing AV data is shown in a fourth embodiment including a plurality of subtitle substreams in a player model with a video reproduction unit or display. The AV reproduction system 800 receives a composite media stream 102 provided by a composite media source 104. In this embodiment, each of the plurality of selected decoded subtitle outputs are applied to a remote subtitle player 804 such as a Personal Digital Assistant (PDA) or other device for reproducing a selected decoded subtitle output.

A decode system controller 870 provides configuration and synchronization for the AV reproduction system 800. In addition to the information regarding desired substream decoding provided by the AV application, the decode system controller 870 receives user preference information from a user command unit 802. The user command unit 802 includes a multi-subtitle selector 174 that provides a selected subtitle substream user input 176 regarding the selection of subtitle substreams.

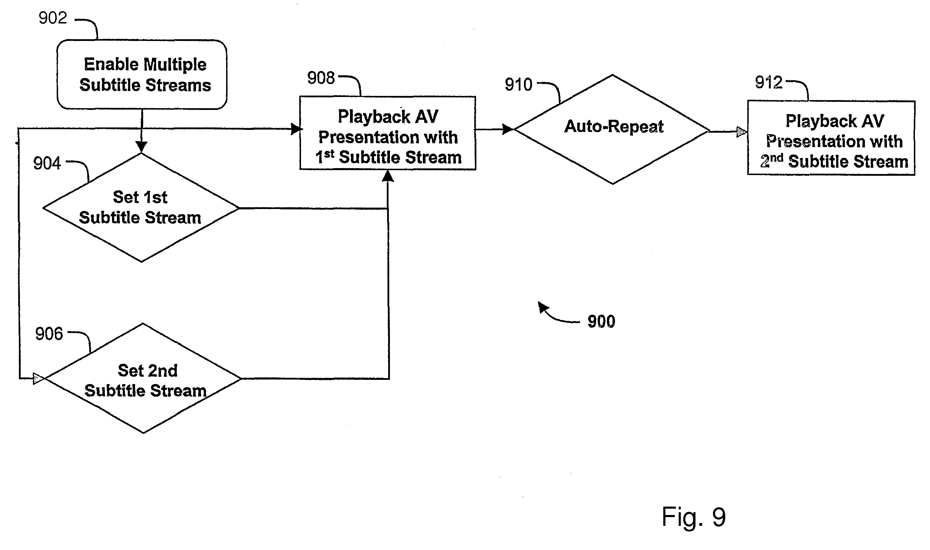

Figure 9 is a flow diagram showing a user model associated with the first, third, and fourth embodiment including the auto-repeat feature. A user enables the selection of multiple subtitle substreams in step 902. The display location for the first subtitle substream is set in step 904. The display location for the second subtitle substream is set in step 906. Once all of the selected subtitle substreams are selected, the user initiates reproduction with only the first subtitle substream overlaid on the visual reproduction unit as described.

The user can initiate an auto-repeat which will repeat the same decoded video output but rendered with the second subtitle substream for an alternate subtitle display during the second reproduction as shown in step 912. The auto-repeat function can be initiated by pressing a key on the specially programmed remote unit, or can be defined in the setup, or upon reaching a predetermined frame. The rendered video output can thus toggle every other time for two selected subtitle substreams. Similarly, for three selected subtitle substreams, a subtitle substream will be repeated every third auto-repeat.

EXAMPLE 5 : The system could provide an interface to easily repeat a segment of the AV presentation - an "auto-repeat" function. The segment length of the auto-repeat function can be user definable or fixed. On each auto-repeat some media-streams are alternated between user selected choices. The media-streams may be interchangeable or independent. The system would provide the user with an interface to define which streams should be alternated. This interface would be separate from AV presentation playback.

EXAMPLE 6 : Currently, a DVD-Video player can playback only one subtitle stream during the DVD-Video application runtime. To change the subtitle stream requires many button presses on the remote control (menu button, selection of settings menu, selection of new subtitle stream, resume play button). In addition, the user would then have to "rewind" the presentation to the point where they wanted to view the subtitle change. This innovation, when applied to DVD-Video, defines a method for easily alternating between user selected subtitle streams during a user repeated playback of an AV presentation segment. This provides a useful tool for language education.

EXAMPLE 7 : Currently, DVD-Video players can playback only one audio stream during the DVD-Video application runtime. To change the audio stream requires many button presses on the remote control (menu button, selection of settings menu, selection of new audio stream, resume play button). In addition, the user would then have to "rewind" the presentation to the point where they wanted to listen to the audio change. This innovation, when applied to DVD-Video, defines a method for easily (one key press on remote control) alternating between user selected audio streams during a user repeated playback of an AV presentation segment. This provides a useful tool for language education and also for repeating AV presentation scenes with normal audio and special purpose audio (commentary etc).

EXAMPLE 8 : Currently, to change audio and subtitle stream playback on a DVD-Video title requires many button presses on the remote control (menu button, selection of settings menu, selection of new audio stream, selection of subtitle stream, resume play button). In addition, the user would then have to "rewind" the presentation to the point where they wanted to experience the changes. This innovation, when applied to DVD-Video, defines a method for easily (one key press on remote control) alternating between audio with subtitle playback and audio only playback. This provides a useful tool for language education (view scene with audio and subtitle then view scene with only audio).

EXAMPLE 9 : In addition to an "auto-repeat" function described in Example 3, the system could further provide a means for the user to define a "repeat-point" during the AV application runtime. The repeat-point would mark a point where the auto-repeat function starts the auto-repeat playback. The innovation would allow the user to easily repeat playback of any segment.

EXAMPLE 10 : Currently, a DVD-Video player does not provide "auto-repeat" or "repeat-point" functionality. This innovation, when applied to DVD-Video, defines a method for easily alternating between user selected audio and/or subtitle streams during a user repeated playback of an AV presentation segment. The auto-repeat function can be initiated, for example, by one key press on specially programmed remote control. Setting the repeat-point itself can be accomplished by a key press on the specially programmed remote control whereby the user can define the repeat-point which indicates the starting point of the auto-repeat function. A user can press a particular key on the remote control to set the repeat point, and at a later time press the auto-repeat key. These two key presses can define the two end points, a beginning point and an ending point, of a repeating reproduction loop.

EXAMPLE 11 : As an alternative, the "auto-repeat" function can provide a way to define repeat-points at authoring time. This would allow the content creator to define segments for easy auto-repeat.

EXAMPLE 12 : Currently, the DVD-Video format does not provide a way for the content creator to define repeat-points. By adding a structure for repeat points, the content creator can define logical segments in a DVD-Video title for user auto-repeat of subtitles and/or audio in players that support "auto-repeat". Such a structure can be added by utilization of reserved fields in existing structures or by adding new structures to the data on the disc.

EXAMPLE 13 : Two or more unique subtitle streams are available for one AV application. The system provides each user with a personalized display and an option of which subtitle stream to decode on their personal display. Figures 7-8 show the possible player models for this example while Figures 2A-2D show the user models. This example application would be useful for providing personalized dialog translation when the same media presentation is provided at the same time to multiple users.

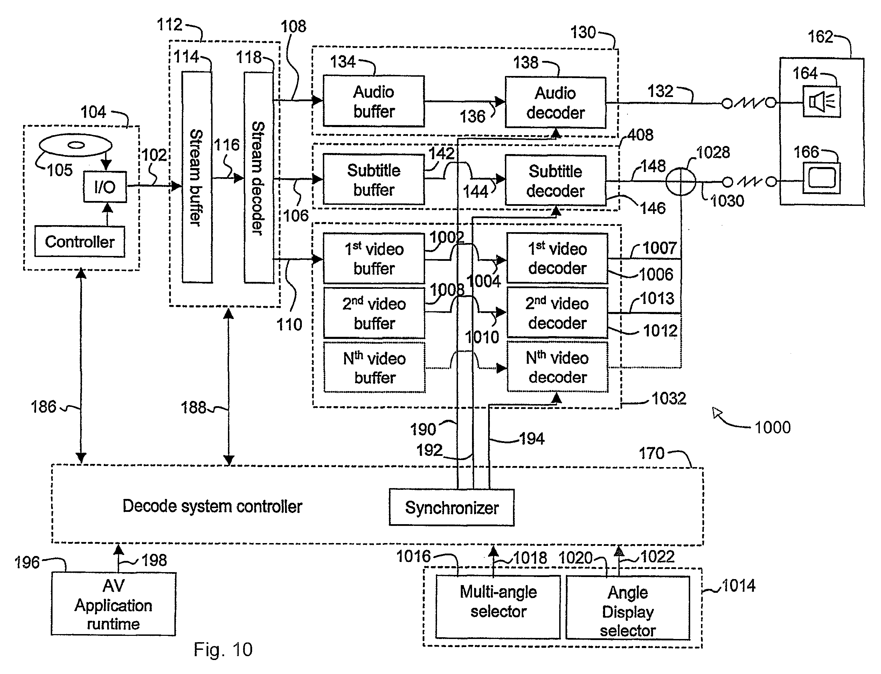

In reference to Figure 10, an audio visual (AV) reproduction system 1000 for reproducing AV data is shown in a fifth embodiment including a plurality of video substreams in a player model with a single video reproduction unit or display. The AV reproduction system 1000 receives a composite media stream 102 provided by a composite media source 104.

The composite media stream 102 includes a video stream 106 including a plurality of video substreams or "angles" as they are known in the art, an audio stream 108, and a subtitle stream 110. A composite media stream separator unit 112 receives the composite media stream 102 and produces the plurality of video substreams 106, the audio stream 108, and the subtitle stream 110 in accordance with direction from the Decode system controller 170. The composite media stream separator unit 112 includes a composite media stream buffer '114 for receiving and storing the composite media stream 102 and producing a buffered composite media stream 116. The buffered composite media stream 116 is applied to the composite media stream decoder 118 that separates the video stream 106, the audio stream 108, and the subtitle stream 110 from the buffered composite media stream 116.

A subtitle decoder unit 408 receives the subtitle stream 110 and produces a decoded subtitle output 148. An audio decoder unit 130 receives the audio stream 108 and produces a decoded audio output 132. A video decoder unit 1032 of the present embodiment simultaneously decodes a plurality of video substreams or angles to produce a corresponding plurality of decoded video outputs 1007, 1013. This buffering and decoding is done for each of the user selected "n" video substreams.

A video overlay unit 1028 receives the decoded subtitle output 148 and the plurality of decoded video outputs 1007, 1013 to produce a rendered video output 1030. A decode system controller 170 may provide additional information to the video overlay unit 1028 to control the order of video overlay based on user priority information provided by the subtitle substream selector unit 112 to decode system controller 170. The rendered video output 1030 is an alpha overlay of the plurality of decoded subtitle output and the decoded video outputs 1007, 1013.

The decoded audio output 132 and the rendered video output 1030 are applied to a reproduction unit 162 having an audio reproduction unit 164 and a video reproduction unit 166. The audio reproduction unit 164 receives the decoded audio output132 and reproduces the decoded audio output in audible form. The video reproduction unit 166 receives the rendered video output 160 and reproduces the rendered video output 160 in a visual form.

A decode system controller 170 provides configuration and synchronization processes for the AV player model 1000. In addition to the information regarding desired substream decoding provided by the AV application the decode system controller 170 receives user preference information from a decoding command unit 1014. The decoding command unit 1014 includes a video multi-angle selector 1018 that provides a selected video substream user input 1022 regarding the selection of video substreams. This information is used by the system controller 170 in addition to the subtitle substream selection provided by the AV application so that both the AV application information and additional user input, supported by the player model, are used together to determine which substreams are rendered at playtime. Alternatively, additional user input may be used instead of the video substreamselection provided by the AV application .thereby giving the player completecontrol over which substreams are decoded.

The decoder command unit 1014 includes a display angle selector 1020 that provides a display location user input 1022 regarding the selected display location for the selected angle substreams. To place a video substream on the correct display area may require scaling as part of the decoding process.

EXAMPLE 14 : With the advent of High Definition displays, display devices are now capable of accepting 6 times greater resolution than compared with Standard Definition resolution as used in DVD-Video. It would be possible to show four Standard Definition video streams on one High Definition display. This could be used to simultaneously show different angles from a DVD-Video title, for example, with no loss of quality. DVD-Video supports up to nine different video substreams or angles.

EXAMPLE 15 : With standard definition displays, it would be possible to scale several video streams onto the display. This could be used to simultaneously show different angles from a DVD-Video title, for example, and give the user a sense of what is happening in each camera angle.

EXAMPLE 16 : Different video angles could be overlaid onto the angle that is currently defined by the AV application to provide angle preview. The preview video angles are used to give the user a Picture-in-Picture preview of what is happening in each angle, thus allowing the user to see what is happening in an angle before they select it for main display.

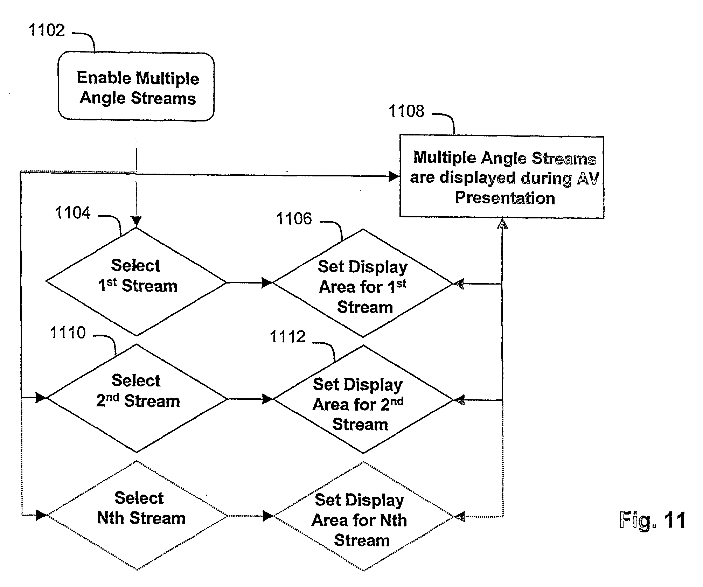

A method for selecting multiple video substreams or angles and then selecting a display area for the selected video substreams is shown in Figure 11. After the selection of multiple substreams is enabled in step 1102, the first video substream is selected in step 1104 and the display area may be set in step 1106. Once the first video substream is selected and the display area for the first video substream is selected, the first selected video substream is set for display in step 1108. A second video substream is selected in step 1110 and the display area may be set in step 1112. Once the second video substream is selected and the display area for the second video substream is selected, the second selected video stream is set for display in step 1108.

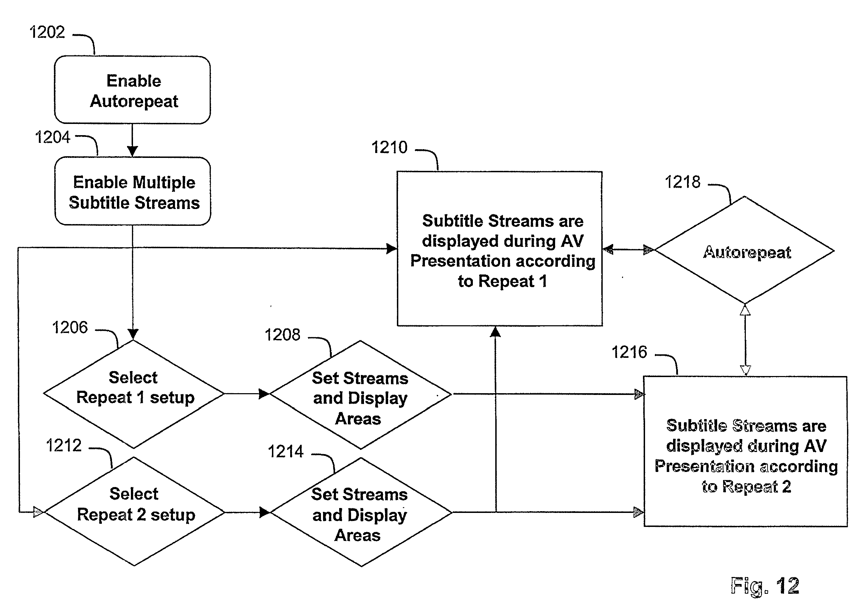

In reference to Figure 12, an alternative auto-repeat mode with two sets of subtitle streams is described including the ability to toggle between the two auto-repeat setups. The auto-repeat mode is enabled in step 1202. The multiple subtitle substreams mode is enabled in step 1204. The first repeat setup is selected in step 1206 and control flows to step 1208 for setting the substreams and display areas for the first repeat setup as described in reference to Figures 2A and 2C. The selected subtitles in the first repeat setup are then set for display in step 1210. Similarly, the second repeat setup is selected in step 1212 and control flows to step 1214 for setting the substreams and display areas for the second repeat setup as described in reference to Figures 2A and 2C.

The selected subtitles in the first repeat setup are then set for display in step 1216. Once both the first repeat setup and the second repeat setup are completed, a user can toggle between the two auto-repeat setups by user selection methods that may be provided via on-screen, or on-device, or more simply via direct key presses on a remote control unit. As described in reference to Figures 5A-5B, the auto-repeat selector applies a user input to automatically repeat the reproduction of a predetermined portion of the composite media stream with the selected display configuration and can toggle between the predetermined first and second display configurations.

A sixth embodiment of the present invention receives a composite media stream that includes a plurality of audio substreams as in the second embodiment, a plurality of subtitle substreams as in the third embodiment, and a plurality of video substreams as in the fifth embodiment.

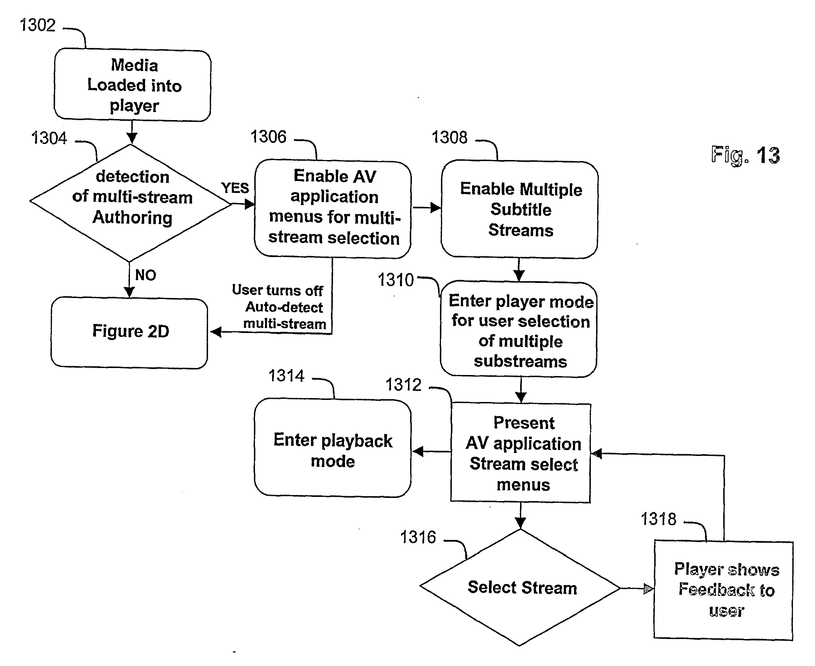

Figure 13 is a flow diagram showing an initial setup following introduction of a media element. A media element 105 is introduced into a media source 104 in step 1302. The decode system controller 170 receives status information from the media source 104 indicating whether the media element 105 includes multi-stream Authoring in step 1304. If the media element 105 includes multi-stream Authoring, control flow moves to step 1306 where the AV application menus for multi-stream selection are enabled. If the media element 105 does not include multi-stream Authoring, control flow moves to step 202 in Figure 2D where multiple subtitle stream reproduction capability is enabled.

In step 1306, if a user has turned off or disaffirms through a key press or a menu selection the Auto-detect capability of the multi-stream Authoring detection, control flow moves to step 202 in Figure 2D as described. If the Auto-detection of multi-stream Authoring is active, control flow moves to step 1308 where multiple subtitle substreams are enabled. Alternatively, multiple audio substreams can be detected and step 1308 would enable multiple audio substreams.

After multiple subtitle substreams are enabled, control flow moves to step 1310 where the player mode for user selection of multiple substreams is entered. Once the player mode for user selection of multiple substreams is entered, control flow moves to step 1312 where the AV application substream select menus are presented to the user. The user can, at this point, select the normal playback mode, and control flow moves to step 1314 and multiple substreams are not selected. However, in step 1312 if the user wishes to select multiple substreams, control flow moves to step 1316 which includes the process described in relation to Figures 2A and 2C for multiple subtitle substream selection or Figure 2B for multiple audio substream selection.

Once a substream is selected, control flow moves to step 1318 where the selection is displayed to the user as a confirmation and control flow moves back to step 1312. This loop from steps 1312 to step 1316 to step 1318 and back to step 1312 is repeated for each selected substream. Once all the desired substreams are selected, from step 1312 the user selects to enter the playback mode in step 1314.

## Claims

1. An audio visual (AV) reproduction system for providing subtitle outputs to a plurality of external PDA (Personal Digital Assistant) devices comprising:
a composite media stream separator for decomposing a composite media stream to produce a video stream, an audio stream, and a plurality of subtitle substreams;
a video decoder for decoding the video stream to produce a decoded video output;
a video reproduction player for reproducing the decoded video output provided thereto;
an audio decoder for decoding the audio stream to produce a decoded audio output;
an audio reproduction player for reproducing the decoded audio output provided thereto;
a subtitle decoder for decoding the plurality of subtitle substreams to produce a plurality of decoded subtitle outputs;
a decode system controller for providing configuration and synchronization to the subtitle outputs and for receiving users' inputs to select any of the decoded subtitle outputs and causing said subtitle decoder to apply each of the plurality of selected decoded subtitle outputs to the external PDA devices; and
a subtitle selector in each of the external PDA devices to enable selection of one of said selected decoded subtitle outputs for production of the selected subtitle for that external PDA device.

2. An audio visual (AV) reproduction method for providing subtitle outputs to a plurality of external PDA (Personal Digital Assistant) comprising:
decomposing, using a composite media stream separator, a composite media stream to produce a video stream, an audio stream, and a plurality of subtitle substreams;
decoding, using a video decoder, the video stream to produce a decoded video output;
reproducing, using a video reproduction player, the decoded video output provided thereto;
decoding, using an audio decoder, the audio stream to produce a decoded audio output;
reproducing, using an audio reproduction player, the decoded audio output provided thereto;
decoding, using a subtitle decoder, the plurality subtitle substreams to produce a plurality of decoded subtitle outputs;
using the decode system controller for providing configuration and synchronization to the subtitle outputs and for receiving user inputs to select any of the decoded subtitle outputs and causing said subtitle decoder to apply each of the plurality of selected decoded subtitle outputs to one or more external PDA devices; and
selecting, using a subtitle selector in each of the external PDA devices, one of said selected decoded subtitle outputs for reproduction of the selected subtitle for that external PDA device.

## Patentansprüche

1. Audiovisuelles (AV) Wiedergabesystem zum Bereitstellen von Untertitelausgaben für eine Vielzahl von externen PDA- (persönlichen digitalen Assistenten) Vorrichtungen, umfassend:
eine zusammengesetzte Medienstrom-Trennvorrichtung zum Zerlegen eines zusammengesetzten Medienstroms, um einen Videostrom, einen Audiostrom und eine Vielzahl von Untertitelströmen zu erzeugen;
einen Videodecoder zum Decodieren des Videostroms, um eine decodierte Videoausgabe zu erzeugen;
ein Videowiedergabeprogramm zum Wiedergeben der decodierten Videoausgabe, die diesem bereitgestellt wird;
einen Audiodecoder zum Decodieren des Audiostroms, um eine decodierte Audioausgabe zu erzeugen;
ein Audiowiedergabeprogramm zum Wiedergeben der decodierten Audioausgabe, die diesem bereitgestellt wird;
einen Untertiteldecoder zum Decodieren der Vielzahl von Untertitelteilströmen, um eine Vielzahl von decodierten Untertitelausgaben zu erzeugen;
einen Decodiersystem-Controller zum Bereitstellen einer Konfiguration und Synchronisation für die Untertitelausgaben und zum Empfangen von Benutzereingaben, um eine der decodierten Untertitelausgaben auszuwählen, und zum Bewirken, dass der Untertiteldecoder jede von der Vielzahl von ausgewählten decodierten Untertitelausgaben auf die externen PDA-Vorrichtungen anwendet; und
eine Untertitelauswahlvorrichtung in jeder der externen PDA-Vorrichtungen, um eine Auswahl einer der ausgewählten decodierten Untertitelausgaben zur Erzeugung des ausgewählten Untertitels für diese externe PDA-Vorrichtung zu ermöglichen.

2. Audiovisuelles (AV) Wiedergabeverfahren zum Bereitstellen von Untertitelausgaben für eine Vielzahl von externen PDA (persönlichen digitalen Assistenten), umfassend folgende Schritte:
unter Verwendung einer zusammengesetzten Medienstrom-Trennvorrichtung, Zerlegen eines zusammengesetzten Medienstroms, um einen Videostrom, einen Audiostrom und eine Vielzahl von Untertitelströmen zu erzeugen;
unter Verwendung eines Videodecoders, Decodieren des Videostroms, um eine decodierte Videoausgabe zu erzeugen;
unter Verwendung eines Videowiedergabeprogramms, Wiedergeben der decodierten Videoausgabe, die diesem bereitgestellt wird;
unter Verwendung eines Audiodecoders, Decodieren des Audiostroms, um eine decodierte Audioausgabe zu erzeugen;
unter Verwendung eines Audiowiedergabeprogramms, Wiedergeben der decodierten Audioausgabe, die diesem bereitgestellt wird;
unter Verwendung eines Untertiteldecoders, Decodieren der Vielzahl von Untertitelteilströmen, um eine Vielzahl von decodierten Untertitelausgaben zu erzeugen;
Verwenden des Decodiersystem-Controllers zum Bereitstellen einer Konfiguration und Synchronisation für die Untertitelausgaben und zum Empfangen von Benutzereingaben, um eine der decodierten Untertitelausgaben auszuwählen, und zum Bewirken, dass der Untertiteldecoder jede von der Vielzahl von ausgewählten decodierten Untertitelausgaben auf die eine oder die mehreren externen PDA-Vorrichtungen anwendet; und
unter Verwendung einer Untertitelauswahlvorrichtung in jeder der externen PDA-Vorrichtungen, Auswählen einer der ausgewählten decodierten Untertitelausgaben zur Erzeugung des ausgewählten Untertitels für diese externe PDA-Vorrichtung.

## Revendications

1. Système de reproduction audiovisuel (AV) pour fournir des sorties de sous-titres à une pluralité de dispositifs de PDA (assistant numérique personnel) externes comprenant :
un séparateur de flot multimédia composite pour décomposer un flot multimédia composite pour produire un flot vidéo, un flot audio, et une pluralité de flots secondaires de sous-titres ;
un décodeur vidéo pour décoder le flot vidéo pour produire une sortie vidéo décodée ;
un lecteur de reproduction vidéo pour reproduire la sortie vidéo décodée fournie à celui-ci ;
un décodeur audio pour décoder le flot audio pour produire une sortie audio décodée ;
un lecteur de reproduction audio pour reproduire la sortie audio décodée fournie à celui-ci ;
un décodeur de sous-titres pour décoder la pluralité de flots secondaires de sous-titres pour produire une pluralité de sorties de sous-titres décodées ;
un contrôleur de système de décodage pour fournir une configuration et une synchronisation aux sorties de sous-titres et pour recevoir des entrées d'utilisateurs pour sélectionner l'une quelconque des sorties de sous-titres décodées et amener ledit décodeur de sous-titres à appliquer chacune de la pluralité de sorties de sous-titres décodées sélectionnées aux dispositifs de PDA externes ; et
un sélecteur de sous-titre dans chacun des dispositifs de PDA externes pour permettre la sélection de l'une desdites sorties de sous-titres décodées sélectionnées pour la production du sous-titre sélectionné pour ce dispositif de PDA externe.

2. Procédé de reproduction audiovisuel (AV) pour fournir des sorties de sous-titres à une pluralité de PDA (assistant numérique personnel) externes comprenant :
la décomposition, en utilisant un séparateur de flot multimédia composite, d'un flot multimédia composite pour produire un flot vidéo, un flot audio, et une pluralité de flots secondaires de sous-titres ;
le décodage, en utilisant un décodeur vidéo, du flot vidéo pour produire une sortie vidéo décodée ;
la reproduction, en utilisant un lecteur de reproduction vidéo, de la sortie vidéo décodée fournie à celui-ci ;
le décodage, en utilisant un décodeur audio, du flot audio pour produire une sortie audio décodée ;
la reproduction, en utilisant un lecteur de reproduction audio, de la sortie audio décodée fournie à celui-ci ;
le décodage, en utilisant un décodeur de sous-titres, de la pluralité de flots secondaires de sous-titres pour produire une pluralité de sorties de sous-titres décodées ;
l'utilisation du contrôleur de système de décodage pour fournir une configuration et une synchronisation aux sorties de sous-titres et pour recevoir des entrées d'utilisateurs pour sélectionner l'une quelconque des sorties de sous-titres décodées et amener ledit décodeur de sous-titres à appliquer chacune de la pluralité de sorties de sous-titres décodées sélectionnées à un ou plusieurs dispositifs de PDA externes ; et
la sélection, en utilisant un sélecteur de sous-titre dans chacun des dispositifs de PDA externes, de l'une desdites sorties de sous-titres décodées sélectionnées pour la reproduction du sous-titre sélectionné pour ce dispositif de PDA externe.
